# FASCICULE DE BREVET EUROPEEN

(11) **EP 0 431 985 B1**
(45) Date de publication et mention de la délivrance du brevet: **01.09.1993**
(21) Numéro de dépôt: 90402813.1
(22) Date de dépôt: 09.10.1990
(51) Int. Cl.: F01N 3/20, F01N 7/08

(54) **Dispositif d'évacuation et de traitement anti-pollution de gaz d'échappement d'un moteur**
Vorrichtung zum Abführen und zur Reinigung von Auspuffgasen eines Motors
Evacuation and anti-pollution treatment device of exhaust gases of an engine

(30) Priorité: 06.12.1989 FR 8916126
(43) Date de publication de la demande: 12.06.1991
(73) Titulaire: AUTOMOBILES PEUGEOT, 75116 Paris (FR); AUTOMOBILES CITROEN, 92200 Neuilly-sur-Seine (FR)
(72) Inventeur: Berthier, Hubert, F-95130 Saint Ouen l'Aumone (FR)
(74) Mandataire: Bouget, Lucien

(56) Documents cités:
- EP-A- 0 278 191
- EP-A- 0 313 922
- DE-A- 2 104 711
- DE-A- 2 237 781
- DE-A- 2 303 773
- DE-A- 3 306 484
- DE-U- 8 432 079
- FR-A- 2 018 123
- GB-A- 2 221 252
- US-A- 3 744 248
- US-A- 3 984 975
- PATENT ABSTRACTS OF JAPAN vol. 7, no. 137 (M-222)(1282) 15 juin 1983,& JP-A-58 51212 (NISSAN JIDOSHA) 25 mars 1983,

## Description

L'invention concerne un dispositif d'évacuation et de traitement anti-pollution des gaz d'échappement d'un moteur.

A l'heure actuelle, dans la plupart des pays industrialisés, l'homologation d'un nouveau type de véhicule doit être précédée par des essais permettant de contrôler le respect de valeurs limites, en ce qui concerne l'émission de matières polluantes contenues dans les gaz d'échappement, en particulier dans le cas des véhicules à moteur à essence.

Les principales matières polluantes dont on assure le contrôle sont des gaz tels que l'oxyde de carbone, les hydrocarbures et les oxydes de l'azote.

Ces essais et contrôles anti-pollution sont devenus de plus en plus sévères, si bien qu'actuellement, il est nécessaire de recourir à l'utilisation d'un pot catalytique intercalé sur la ligne d'échappement des gaz pour satisfaire les normes imposées par la réglementation en vigueur.

Les pots catalytiques utilisés actuellement qui sont intercalés sur la ligne d'échappement entre les tubulures d'échappement du moteur et le pot de détente sont constitués par une enveloppe métallique contenant une masse de matériau catalyseur présentant une très grande surface de contact pour les gaz d'échappement traversant le pot catalytique.

Les gaz polluants tels que les gaz mentionnés ci-dessus sont éliminés par une réaction chimique d'oxydation ou de réduction, au contact du catalyseur, dès que celui-ci a été porté par les gaz d'échappement à une température suffisante pour assurer le démarrage de la réaction chimique.

Cette température minimale du catalyseur est généralement comprise entre 250 et 300°C suivant l'âge du catalyseur. Le fonctionnement correct du pot catalytique demande également un bon réglage du mélange air-essence.

En outre, la température du catalyseur doit rester inférieure à une température limite au-delà de laquelle le catalyseur commence à être détérioré, au contact des gaz d'échappement.

La masse de matériau catalytique est généralement constituée par un support en matière céramique ou métallique comprenant des milliers de petits canaux traversés par les gaz d'échappement et recouverts d'une couche d'alumine qui multiplie par environ 7000 la surface active du catalyseur, c'est-à-dire la surface du catalyseur venant en contact avec les gaz. Sur la couche d'alumine, on dépose 2 à 3 g de métaux précieux, généralement du platine et du rodhium qui permettent d'accélérer les vitesses des réactions chimiques d'élimination des gaz polluants.

Compte tenu du mode de fonctionnement d'un pot catalytique, il est nécessaire de placer le pot catalytique le plus près possible du moteur de manière à réduire le temps d'amorçage du catalyseur après un démarrage du moteur froid, les gaz d'échappement parvenant alors au pot catalytique avec un minimum de déperdition calorifique.

En revanche, lorsque le moteur est utilisé à haut régime, par exemple sur un véhicule roulant sur autoroute, il est nécessaire d'éviter une trop forte montée en température du catalyseur dont la température doit rester inférieure à la limite au-delà de laquelle il commence à se détériorer. Il est donc nécessaire d'éloigner suffisamment le pot catalytique des tubulures d'échappement du moteur pour éviter l'envoi de gaz à trop haute température sur la masse du catalyseur.

Il est également nécessaire de tenir compte de la place disponible sous le plancher du véhicule pour choisir l'emplacement du pot catalytique.

Il en résulte donc des difficultés en ce qui concerne le choix d'une disposition optimale pour le pot catalytique d'un véhicule.

Suivant les performances recherchées pour le moteur, la ligne d'échappement peut être conçue de différentes manières.

Dans le cas des moteurs peu performants, les quatre tubulures associées à chacun des cylindres du moteur sont reliées à un seul tuyau d'échappement sur lequel est disposé le pot de détente et éventuellement le pot catalytique du moteur. Cette disposition est connue sous l'appellation de "quatre dans un".

Dans le cas des moteurs plus performants, on utilise une conception connue sous le nom de "quatre dans deux" dans laquelle deux des tubulures d'échappement associées à deux cylindres du moteur sont reliées à un premier tuyau d'échappement et les deux autres tubulures associées aux deux autres cylindres du moteur, à un second tuyau d'échappement. Les deux tuyaux d'échappement sont reliés entre eux en amont du pot de détente, et par exemple au niveau d'un pot catalytique.

La disposition "quatre dans deux" a été améliorée en utilisant un tube dit "tube siamois" qui est séparé en son milieu par une cloison plane disposée suivant un plan diamétral. Le tube siamois est équivalent à deux tubes d'une ligne d'échappement, chacun des conduits séparés par la cloison plane étant relié à deux tubulures d'échappement associées à deux cylindres du moteur.

Les lignes d'échappement comportant un tube siamois sont plus faciles à loger sous le plancher du véhicule et entraînent des déperditions de chaleur plus faibles que deux conduits séparés, dans la mesure où les deux conduits du tube siamois ont une paroi commune et une surface d'échange avec l'extérieur d'une valeur plus faible pour une section des conduits équivalente.

Dans le cas d'une ligne d'échappement à deux conduits parallèles, on a déjà proposé d'associer un pot catalytique à chacun des conduits reliés à un ensemble de cylindres du moteur.

Un dispositif à clapets ou vannes placé à l'entrée ou à la sortie de l'un des pots catalytiques permet d'interrompre la circulation des gaz d'échappement dans l'un des deux conduits parallèles et de faire passer l'ensemble des gaz d'échappement du moteur dans l'autre conduit sur lequel est placé le second pot catalytique, les deux conduits parallèles étant reliés entre eux en amont des deux pots catalytiques.

Un tel dispositif est cependant relativement plus complexe et plus coûteux qu'un dispositif à un seul pot catalytique.

Lors d'un démarrage à froid du moteur, l'ensemble des gaz est dirigé dans un seul des deux conduits parallèles et traverse l'un des deux pots catalytiques. La masse de catalyseur de ce pot catalytique s'échauffe plus vite et l'activation du catalyseur est donc réalisée plus rapidement. Cependant, la masse de catalyseur du second pot catalytique reste à basse température et lors de l'ouverture de la vanne du second conduit, les gaz du moteur viennent en contact avec un catalyseur à basse température, si bien que les réactions d'élimination des gaz polluants ne se produisent pas pendant quelque temps. Cet inconvénient est atténué par le fait que les gaz d'échappement renferment des quantités plus faibles de gaz polluants, lorsque le moteur est chaud, dans la mesure où le mélange injecté dans le moteur est moins riche en combustible. En outre, l'échauffement du second pot catalytique est réalisé avec des gaz à haute température, si bien que son temps d'échauffement jusqu'à sa température d'activation se trouve réduit.

Dans le DE-A-2.104.711, on a proposé un dispositif permettant d'accélérer le chauffage d'une masse de catalyseur d'un pot catalytique dans une phase de démarrage du moteur.

Le conduit d'échappement comporte un embranchement au niveau duquel il se sépare en un premier conduit traversant la masse du catalyseur et en un second conduit débouchant dans l'enveloppe du catalyseur et une vanne d'ouverture ou de fermeture des conduits.

Un tel dispositif qui ne comporte pas deux tuyaux d'échappement distincts reliés chacun, à l'une de leurs extrémités, à deux tubulures d'échappement du moteur et, à leur autre extrémité, au pot catalytique, ne pourrait être utilisé sur les moteurs à haute performance.

En outre, la vanne d'ouverture et de fermeture des conduits est commandée en fonction de la température du moteur uniquement, si bien que le niveau de puissance demandé au moteur n'est pas pris en compte. Enfin, les gaz d'échappement n'assurent le chauffage de la masse du catalyseur, dans la phase de démarrage, qu'à travers la paroi du premier conduit.

Dans le FR-A-2.018.123, on a proposé un dispositif de post-combustion d'un moteur qui est relié au pot d'échappement par une conduite secondaire débouchant dans la ligne d'échappement principale reliée aux tubulures du moteur. Une vanne commandée en fonction de la puissance demandée au moteur permet de fermer la partie de la ligne d'échappement reliée aux tubulures quand le moteur fonctionne à faible puissance. Ce dispositif n'est pas conçu pour assurer un fonctionnement satisfaisant d'un pot catalytique lors du démarrage à froid du moteur.

Les dispositifs suivant l'art anté-rieur ne permettent pas d'obtenir des conditions optimales, aussi bien en ce qui concerne le coût de construction du dispositif d'échappement que les conditions de fonctionnement de ce dispositif, lors du démarrage à froid du moteur et lors de son fonctionnement à chaud.

Le but de l'invention est donc de proposer un dispositif d'évacuation et de traitement antipollution des gaz d'échappement d'un moteur comportant au moins deux conduits parallèles reliés chacun à l'une de ses extrémités à une partie des tubulures d'échappement fixées à la sortie des cylindres du moteur et à son autre extrémité à au moins un pot catalytique constitué par une enveloppe renfermant une masse de matériau catalyseur permettant une élimination des gaz nocifs contenus dans les gaz d'échappement du moteur parvenant au contact du catalyseur, ce dispositif étant relativement simple et peu coûteux et permettant d'assurer une bonne efficacité du pot catalytique quelles que soient les conditions de fonctionnement du moteur.

Dans ce but :
- les deux conduits parallèles sont reliés à une seule enveloppe contenant le matériau catalyseur et débouchent dans l'enveloppe suivant deux zones adjacentes, de manière à diriger deux flux parallèles de gaz d'échappement dans deux parties adjacentes de la masse de matériau catalyseur,
- et l'un des conduits comporte un volet de fermeture relié à des moyens de commande assurant la fermeture ou l'ouverture du conduit pendant la phase de démarrage à froid du moteur, suivant la puissance demandée au moteur et maintenant le volet en position d'ouverture, lorsque le moteur est chaud, la position de fermeture du premier conduit assurant une mise en communication des deux conduits, pour l'évacuation des gaz du premier conduit.

Afin de bien faire comprendre l'invention, on va maintenant décrire, à titre d'exemple non limitatif, en se référant aux figures jointes en annexe, un mode de réalisation d'un dispositif d'évacuation et de traitement antipollution des gaz d'échappement d'un moteur suivant l'invention.

La figure 1 est une vue générale en perspective éclatée d'une ligne d'échappement présentant les caractéristiques suivant l'invention.

La figure 2 est une vue à plus grande échelle d'une partie de la ligne d'échappement représentée sur la figure 1 comportant un tuyau d'échappement du type tube siamois relié à un pot catalytique.

La figure 3 est une vue en coupe axiale à plus grande échelle d'une partie du tuyau d'échappement à double conduit représenté sur la figure 2 dans laquelle est placé un volet de fermeture de l'un des conduits.

La figure 3A est une vue suivant A-A de la figure 3.

La figure 3B est une vue suivant B-B de la figure 3.

La figure 4 est une vue en coupe partielle et en élévation montrant la position des moyens de commande du volet de fermeture représenté sur les figures 3, 3A et 3B, lorsque le moteur est froid.

La figure 5 est une vue en coupe partielle et en élévation montrant la position des moyens de commande du volet de fermeture représenté sur les figures 3, 3A et 3B, lorsque le moteur est chaud.

La figure 6A est un schéma fonctionnel montrant la circulation des gaz dans un tube siamois d'un dispositif suivant l'invention, pendant le démarrage à froid du moteur.

La figure 6B est un schéma fonctionnel montrant la circulation des gaz d'échappement dans un tube siamois d'un dispositif suivant l'invention, pendant le fonctionnement à chaud du moteur ou pendant une phase d'accélération à froid.

La figure 6C est une vue en coupe transversale suivant C-C de la figure 6A.

La figure 7 est une vue latérale en élévation d'un dispositif d'échappement suivant l'invention et suivant une variante de réalisation.

La figure 7A est une vue en coupe suivant A-A de la figure 7.

La figure 8 est une vue de dessus du dispositif d'échappement représenté sur la figure 7.

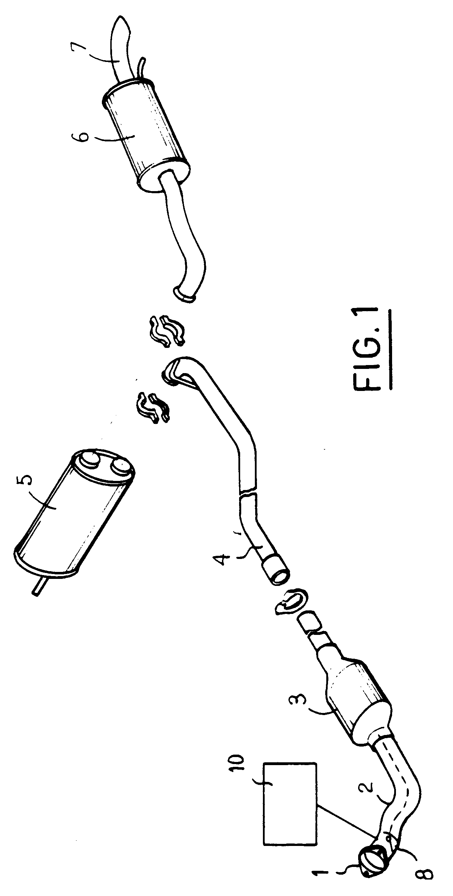

Sur la figure 1, on voit l'ensemble d'une ligne d'échappement d'un véhicule automobile comportant, à l'une de ses extrémités, une pièce de raccordement 1 d'un premier tuyau d'échappement 2 au collecteur d'échappement du moteur et un pot catalytique 3 raccordé au premier moyen d'échappement 2 et à un second tuyau 4 lui-même relié à un pot de détente 5.

Le pot de détente 5 est relié à un pot d'échappement 6 dont la sortie est constituée par un tuyau d'échappement terminal 7 débouchant à l'atmosphère.

Comme il sera expliqué de manière plus détaillée dans la suite du texte, le premier tuyau d'échappement 2 est réalisé sous la forme d'un tube siamois à deux conduits et, suivant l'invention, un volet d'ouverture et de fermeture de l'un des conduits du tube siamois 2 est placé dans une portion 8 d'extrémité du tube 2 et relié à un ensemble de commande d'ouverture et de fermeture 10.

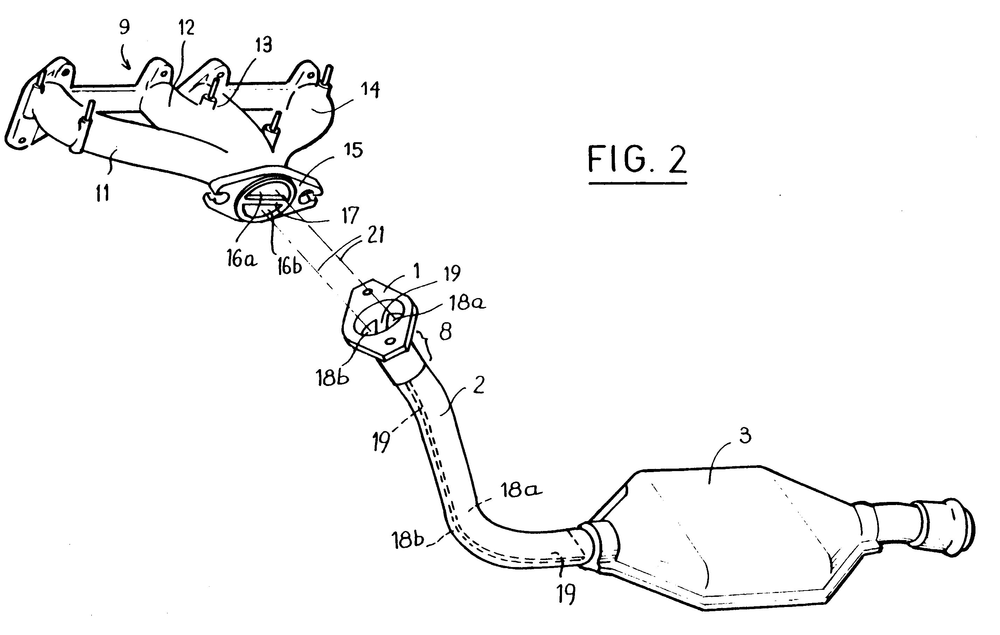

Sur la figure 2, on a représenté le collecteur d'échappement 9 d'un moteur à essence à quatre cylindres comportant quatre tubulures 11, 12, 13 et 14 reliées respectivement à leur extrémité d'entrée au conduit d'échappement du premier, du second, du troisième et du quatrième cylindre et réunies entre elles au niveau de la partie de sortie du collecteur qui comporte une cloison de séparation 17, de manière que les tubulures 11 et 14 du premier et du quatrième cylindres débouchent dans une première chambre 16a délimitée par la cloison 17 et les tubulures 12 et 13 reliées au deuxième et au troisième cylindres dans une seconde chambre 16b délimitée par la cloison 17. La partie de sortie du collecteur d'échappement 9 comporte une bride de raccordement 15 destinée à assurer la fixation de la ligne d'échappement par l'intermédiaire de la pièce de raccordement 1 appelée rotule.

La rotule 1 est rendue solidaire de l'extrémité du tube siamois 2 par l'intermédiaire de la portion 8 de ce tube dans laquelle est monté le volet de fermeture de l'un des conduits du tube siamois 2.

Le tube siamois 2 est constitué par un élément métallique tubulaire dont le volume interne est séparé en deux parties 18a et 18b à section semi-circulaire par une cloison transversale 19 disposée de manière diamétrale dans le tube 2. La cloison 19 se prolonge jusqu'au niveau de la partie d'entrée de la rotule 1, de manière que lors du raccordement du tube siamois 2 sur le collecteur d'échappement 9, par l'intermédiaire de la rotule 1 et de la bride 15, la chambre 16a du collecteur soit en communication avec le conduit 18a du tube siamois et la chambre 16b avec le conduit 18b, comme il a été représenté par les flèches 21 en pointillés sur la figure 2.

L'extrémité du tube siamois 2 opposée à sa partie de raccordement à la rotule 1 est reliée à l'enveloppe du pot catalytique 3, de manière que les conduits 18a et 18b du tube 2 débouchent l'un et l'autre dans le volume interne du pot catalytique 3 occupé par une masse de catalyseur à grande surface de contact, comme il a été décrit ci-dessus.

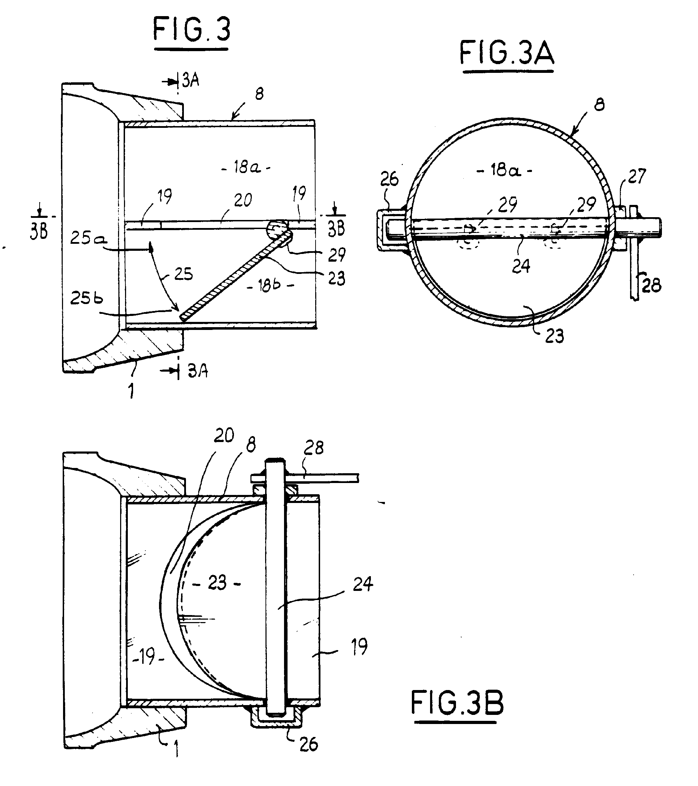

Sur les figures 3, 3A et 3B, on a représenté à plus grande échelle et en coupe par un plan axial, la partie d'extrémité de la rotule 1 sur laquelle est fixée l'extrémité 8 de l'enveloppe du tube siamois 2 séparé en deux conduits 18a et 18b par une cloison diamétrale 19.

Comme il est visible en particulier sur la figure 3, la cloison 19 comporte une ouverture traversante 20 à l'intérieur de l'extrémité 8 de l'enveloppe du tube 2 dont la forme semi-circulaire est visible sur la figure 3B. Un volet de fermeture 23 du conduit 18b est monté articulé par l'intermédiaire d'un axe 24 dans la paroi de la partie d'extrémité 8 du tube siamois 2.

Le volet 23 de forme semi-circulaire présente un diamètre supérieur au diamètre de l'ouverture 20 afin d'assurer un recouvrement complet du bord de l'ouverture dans sa position relevée schématisée par l'extrémité 25a de la flèche 25 qui symbolise les déplacements par pivotement du volet de fermeture 23, sur la figure 3.

L'extrémité 25b de la flèche 25 correspond au déplacement du volet 23 en position de fermeture, comme représenté sur la figure 3, le bord du volet venant alors en contact avec la surface intérieure du conduit 18b du tube siamois 2.

Pour assurer une fermeture étanche du conduit 18b dans la position basse de fermeture correspondant à l'extrémité 25b de la flèche 25, le bord extérieur du volet 23 peut présenter la forme d'une ellipse à faible excentricité.

L'une des extrémités de l'axe 23 engagé à rotation dans la paroi de l'extrémité 8 du tube 2 est protégée extérieurement par un carter 26 et l'autre extrémité de l'axe est relié à un levier de commande 28.

Comme il est visible sur la figure 3A, l'extrémité de l'axe 24 reliée au levier 28 traverse la paroi de l'extrémité 8 du tube 2, au niveau d'un palier 27 assurant le montage rotatif de l'axe 24 et un passage étanche de l'extrémité de l'axe à travers la paroi d'extrémité 8 du tube 2.

Le volet 23 est fixé de manière rigide sur l'axe 24, par exemple par l'intermédiaire de rivets 29.

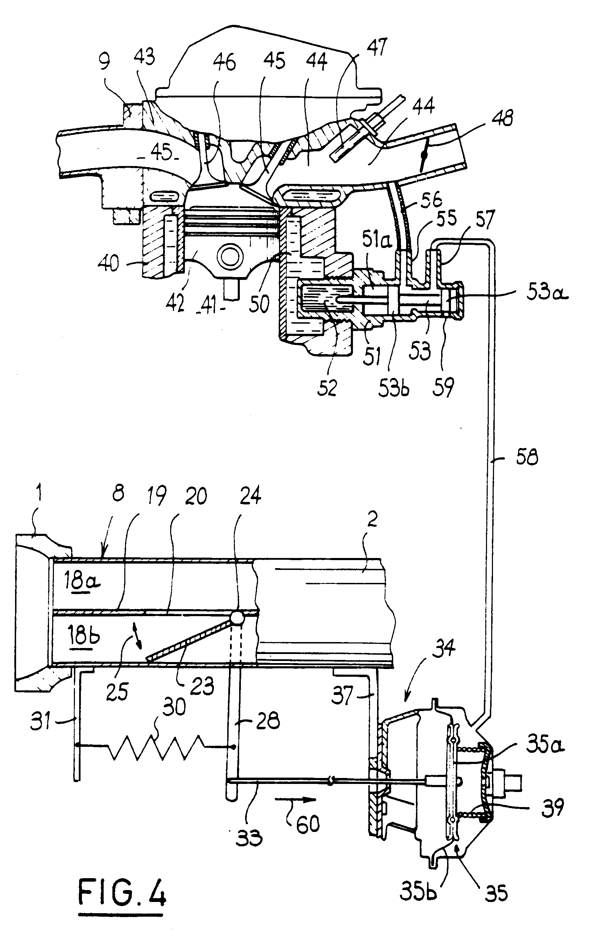

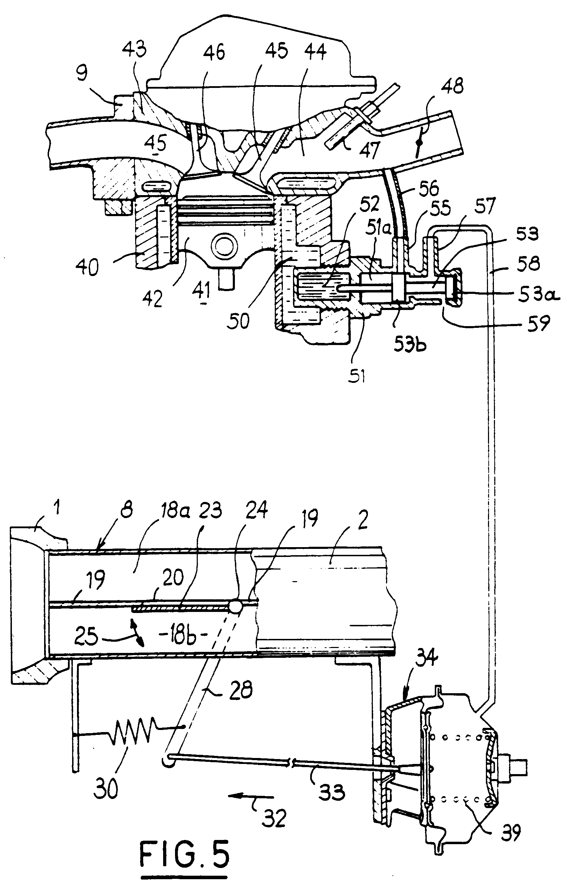

Dans la partie inférieure des figures 4 et 5, on a représenté la partie d'extrémité du dispositif d'échappement suivant l'invention telle qu'elle a été décrite en se reportant aux figures 3, 3A et 3B.

Sur la figure 5, le volet 23 est en position d'ouverture du conduit 18b, ce qui correspond à la fermeture de l'ouverture 20 de la cloison 19, le bord extérieur du volet étant dans la position indiquée par l'extrémité 25a de la flèche 25.

Au contraire, sur la figure 4, le volet 23 est en position de fermeture du conduit 18b du tube siamois 2 et donc en position d'ouverture de l'ouverture 20 de la cloison 19.

Le levier 28 solidaire de l'axe 24 du volet 23 est relié, au voisinage de son extrémité opposée à l'axe 24, à une première extrémité d'un ressort hélicoïdal de rappel 30 dont la seconde extrémité est reliée à un support fixe 31 solidaire de la partie d'extrémité 8 du tube 2.

Le ressort 30 a tendance à rappeler le levier 28 dans une direction correspondant à l'ouverture du conduit 18b, c'est-à-dire à la fermeture de l'ouverture 20 de la cloison 19 (flèche 32 sur la figure 5).

L'extrémité du levier 28 opposée à l'axe 24 est également reliée à la tige 33 d'un vérin pneumatique 34 dont la chambre intérieure est séparée de manière étanche en deux parties par une cloison 35 comportant une partie centrale rigide 35a et une partie périphérique flexible 35b permettant les déplacements de la cloison 35 à l'intérieur de la chambre. Le vérin 34 est fixé sur un support 37 solidaire du tube siamois 2, au voisinage de sa partie d'extrémité 8 renfermant le volet 23. La tige 33 est fixée à son extrémité opposée au levier 28, à la partie rigide 35a de la cloison 35 sur laquelle est également fixé un ressort de rappel 39 comprimé et exerçant une pression sur la cloison 35 de manière à déplacer la tige 33 dans la direction de la flèche 32 et à maintenir le volet en position de fermeture de l'ouverture 20 de la cloison 19. Les ressorts 30 et 39 agissent ainsi dans le même sens, de manière à maintenir le volet en position de fermeture de l'ouverture 20.

Dans la partie supérieure des figures 4 et 5, on a représenté la partie supérieure du bloc cylindre 40 d'un moteur à essence, au niveau d'un cylindre 41 dans lequel se déplace un piston 42. La partie supérieure du cylindre 41 est fermée par la culasse 43 dans laquelle sont usinés, au niveau de la partie supérieure du cylindre 41, un conduit d'admission de mélange d'air et de carburant 44 et un conduit d'échappement 45. Le collecteur d'échappement 9 est fixé sur la culasse de manière à mettre en communication le conduit d'échappement 45 avec la tubulure du cylindre 41.

Une soupape d'admission 45 et une soupape d'échappement 46 sont montées dans la culasse 43 de manière à assurer l'ouverture et la fermeture des conduits d'admission 44 et d'échappement 45, respectivement.

Un injecteur de carburant 47 débouche à l'entrée de la conduite d'admission 44, légèrement en aval de la soupape 45.

Une vanne papillon comportant un obturateur 48 est disposée dans la conduite d'admission en amont de l'injecteur 47.

L'ouverture de l'obturateur papillon 48 est commandée, de manière habituelle, par l'accélérateur du véhicule.

Le bloc cylindre 40 comporte un chemisage 50 dans lequel circule l'eau de refroidissement du moteur.

Une thermovanne 51 est fixée de manière étanche dans un alésage fileté traversant une partie du bloc cylindre 40, de manière que l'extrémité de la thermovanne 51 constituée par un élément thermosensible 52 se trouve au voisinage immédiat de l'eau circulant dans le chemisage 50 avec laquelle elle se met très rapidement en équilibre thermique.

La thermovanne 51 comporte une chambre 51a dans laquelle se déplace un obturateur à tiroir 53 comportant une extrémité reliée à l'élément thermosensible 52.

La thermovanne 51 comporte un premier ajutage 55 et un second ajutage 57 débouchant l'un et l'autre dans le volume intérieur du corps de la thermovanne 51, dans lequel se déplace le tiroir obturateur 53. L'ajutage 57 est relié par un tube 56 au conduit d'admission 44, en aval du papillon 48. Le second ajutage 57 est relié par un tube 58 à la chambre du vérin pneumatique 34, du côté opposé à la tige 33.

De plus, le corps de la thermovanne 51 est percé d'une ouverture 59 au voisinage de son extrémité extérieure permettant de mettre son volume intérieur à l'atmosphère.

Lorsque le moteur est froid, l'eau de refroidissement circulant dans le chemisage 50 étant à une température inférieure à une certaine limite qui peut être par exemple 60°, l'élément thermosensible 52 place l'obturateur à tiroir 53 dans sa position représentée sur la figure 4. Cet obturateur comporte une partie d'extrémité élargie 53a qui se trouve alors en position de fermeture de l'ouverture 59 de mise à l'atmosphère du volume interne du corps de la thermovanne 51.

La chambre du vérin pneumatique 34 est mise en communication par l'intermédiaire du tube 58, du volume intérieur de la thermovanne 51 et du tube 56 avec le conduit d'admission 44 en aval du papillon 48. La chambre du vérin 34 est soumise à la dépression dans le conduit d'admission, ce qui provoque le déplacement de la paroi 35 et de la tige 33, dans le sens de la flèche 60. Le ressort 39 se comprime, l'extrémité du levier 28 reliée à la tige 33 se déplace dans le sens de la flèche 60 et le ressort 30 se dilate. Le volet 23 est placé en position de fermeture du conduit 18b, c'est-à-dire en position d'ouverture de l'orifice 20.

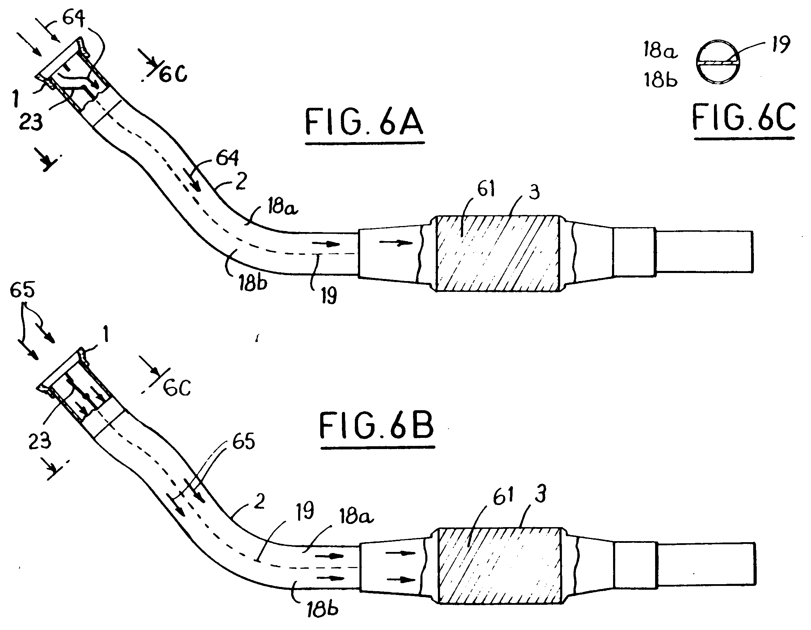

L'ensemble des gaz provenant des quatre cylindres du moteur est dévié par le volet 23 de manière à passer uniquement dans le conduit 18a du tube siamois 2, comme il est représenté sur la figure 6A sur laquelle le trajet des gaz est schématisé par les flèches 64.

Comme il est visible sur la figure 6C, le conduit 2 du dispositif représenté sur les figures 6A et 6B est réalisé sous la forme d'un tube siamois comportant deux conduits superposés 18a, 18b séparés par une cloison 19.

Pendant la phase de démarrage à froid du moteur, les pertes thermiques sont réduites, dans la mesure où un seul conduit est en fonctionnement, ce qui diminue d'autant les surfaces d'échange avec l'atmosphère extérieure. En outre, le temps de transfert est réduit et le flux de gaz est concentré sur une plus faible section de la masse de catalyseur 61 disposée à l'intérieur de l'enveloppe 3 du pot catalytique.

Cette circulation des gaz dans un seul conduit du tube siamois permet de diminuer considérablement le temps de mise en température du catalyseur, ce catalyseur passant par exemple d'une température ambiante de 20°C à sa température d'activation de 300°C.

On obtient ainsi une meilleure conversion catalytique des gaz polluants, en particulier dans les conditions de mise en oeuvre des essais anti-pollution pour l'homologation d'un moteur.

En effet, les tests anti-pollution sont effectués après une immobilisation du véhicule d'une durée de 12 heures à une température ambiante de 20 à 25°. Les émissions de gaz polluants sont analysées et dosées (en g/km) dans la phase de mise en température du catalyseur.

De manière courante, 80% des quantités de gaz polluants produites sont émises pendant le temps que met le catalyseur pour atteindre sa température de fonctionnement.

Lorsque le moteur est chaud (figure 5), la température de l'eau circulant dans le chemisage 50 ayant une valeur par exemple supérieure à 60°C, l'élément thermosensible 52 de la thermovanne 51 déplace le tiroir de l'obturateur 53 qui comporte une partie élargie 53b, de manière que cette partie 53b interrompe la communication entre la partie du volume intérieur du corps de la thermovanne 51 dans laquelle débouche l'ajutage 55 et la partie du corps dans laquelle débouche l'ajutage 57.

Dans ce cas, quelle que soit la position du papillon 48, la chambre du vérin pneumatique 34 est mise à la pression atmosphérique par l'intermédiaire de l'ouverture 59 et de la conduite 58. La tige 33 du vérin se déplace dans le sens de la flèche 32 sous l'effet des ressorts 30 et 39.

Ces ressorts assurent le déplacement et le maintien du volet 23 dans sa position de fermeture de l'orifice 20 de la paroi 19, c'est-à-dire dans sa position d'ouverture du conduit 18b du tube siamois 2.

Les gaz d'échappement sont alors susceptibles de circuler à l'intérieur des deux conduits 18a et 18b du tube 2 simultanément, comme il est représenté sur la figure 6B et schématisé par les flèches 65.

Les gaz provenant des cylindres 1 et 4 sont acheminés jusqu'au pot catalytique 3 où ils entrent en contact avec la masse de catalyseur 61 par le conduit 18a. Les gaz provenant des cylindres 2 et 3 sont acheminés par le conduit 18b.

Le moteur peut ainsi développer sa puissance maximale.

Il est à remarquer qu'au moment de l'ouverture du volet 23, sous l'effet de l'échauffement de l'eau de refroidissement du moteur, la masse de catalyseur 61 est déjà globalement à sa température de fonctionnement, la masse de catalyseur 61 recevant les gaz par le conduit 18a dans la phase de démarrage du moteur s'étant échauffée pendant cette phase par conduction thermique.

De même, le tube siamois 2 s'est échauffé dans son ensemble également par conduction thermique.

En outre, le moteur n'étant plus dans sa phase de démarrage, le mélange est moins enrichi en carburant et la quantité de gaz polluants émis est réduite.

En conséquence, lorsque le volet 23 passe de sa position représentée sur la figure 6A à sa position représentée sur la figure 6B, il ne se produit aucune modification sensible des conditions de fonctionnement du catalyseur, si bien que les émissions de gaz polluants sont extrêmement réduites pendant cette phase intermédiaire.

Dans le cas où le moteur est froid, comme représenté sur la figure 4, l'eau circulant dans le chemisage 50 étant à une température inférieure à la température limite, par exemple 60°, le dispositif de commande décrit et représenté sur la figure 4 permet au moteur de développer une puissance importante, dans le cas où le conducteur du véhicule le juge nécessaire et accélère à fond pour obtenir cette puissance.

En effet, dans ce cas, le papillon 48 s'ouvre entièrement et la dépression dans le collecteur d'admission et en particulier dans la partie du conduit d'admission 44 située en aval de la vanne papillon 48 décroit jusqu'à une valeur proche de la valeur zéro. Le vérin pneumatique 34 n'assure plus la retenue de la tige 33 dans le sens de la flèche 33 et le ressort 30 assure le rappel du levier 28 dans le sens de la flèche 32, comme représenté sur la figure 5. Le volet 23 vient s'appliquer en position de fermeture de l'ouverture 20 et le dispositif fonctionne comme dans le cas où le moteur est chaud, les gaz circulant simultanément dans les conduits 18a et 18b, comme représenté sur la figure 6B.

Le moteur peut alors développer la puissance demandée.

Il faut remarquer cependant que dans ce cas la masse de catalyseur 61 n'est pas encore à sa température d'activation et qu'en conséquence, les gaz polluants contenus dans les gaz d'échappement ne sont pas éliminés en quantité significative. Toutefois, dans ce cas, comme on accèlère à fond pour obtenir une forte puissance, le débit des gaz est important et le temps de mise à température du catalyseur est réduit et avec lui, les émissions de gaz polluants.

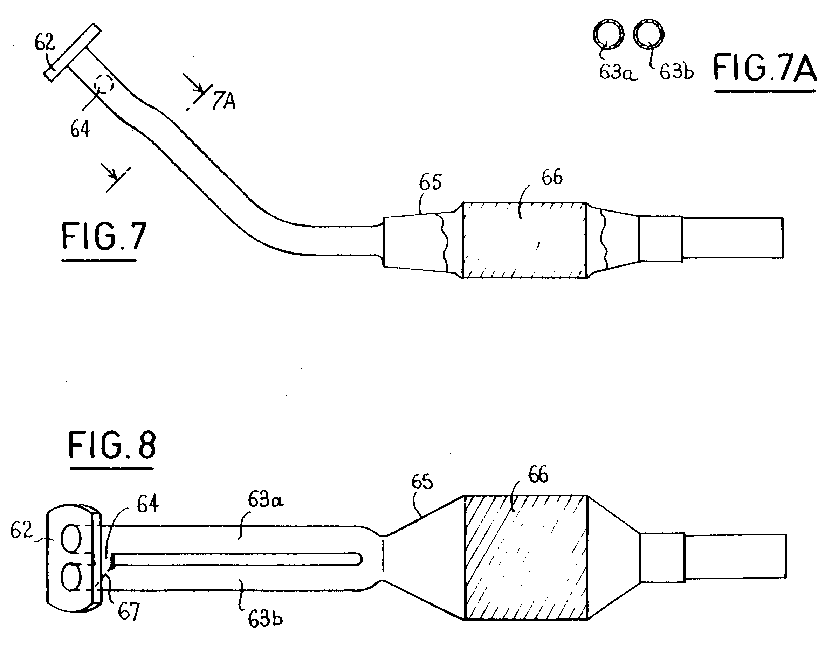

Sur les figures 7, 7A et 8, on a représenté une variante d'un dispositif d'échappement suivant l'invention comportant une rotule 62 de liaison au collecteur d'échappement d'un moteur, deux conduites parallèles 63a et 63b reliées à l'une de leurs extrémités par une conduite en dérivation 64 et un pot catalytique 65 renfermant une masse de catalyseur 66 dans lequel débouchent les parties d'extrémité des conduites 63a et 63b opposées à la dérivation 64 et à la rotule 62.

Un volet 67 de fermeture du conduit 63b est placé au niveau de la dérivation 64 de manière qu'en position d'ouverture du conduit 63b, le volet 67 ferme la dérivation 64. Le volet 67 est commandé par un dispositif tel que représenté sur les figures 4 et 5.

Le fonctionnement et les avantages du dispositif représenté sur les figures 7, 7A et 8 sont identiques au fonctionnement et aux avantages décrits précédemment dans le cas d'un dispositif d'échappement à tube siamois. Cependant, dans la phase de démarrage à froid du moteur, la mise en température du conduit 63b dans lequel les gaz d'échappement ne sont pas mis en circulation s'effectue plus lentement et moins facilement que dans le cas d'un dispositif à tube siamois. En outre, les déperditions calorifiques sont plus fortes, dans la mesure où la surface externe de contact et d'échange des conduits, à sections de passage identiques, est supérieure au cas d'un tube siamois à deux conduits.

Dans tous les cas cependant le dispositif permet d'assurer une élimination efficace des gaz polluants pendant la phase de démarrage du moteur et d'assurer un fonctionnement à pleine puissance aussi bien lorsque le moteur est froid que lorsque le moteur est chaud.

En outre, le dispositif est peu encombrant et utilise des moyens de commande simples et dont le fonctionnement est très sûr.

Il est bien évident que l'invention ne se limite pas au mode de réalisation qui a été décrit.

C'est ainsi que le boîtier dans lequel est monté le volet de fermeture et d'ouverture de l'un des conduits du tuyau d'échappement peut être constitué non seulement par une partie initiale du tuyau d'échappement mais encore par un boîtier adapté sur le collecteur d'échappement du moteur auquel est reliée l'extrémité du tuyau d'échappement.

Le volet d'ouverture et de fermeture de l'un des conduits du tuyau d'échappement peut être commandé non seulement de la manière qui a été décrite mais encore par une sonde de température placée dans la masse du catalyseur et reliée à un circuit de commande de l'ouverture et de la fermeture du volet.

La mise en position d'ouverture du volet afin de permettre le passage des gaz dans les deux conduits du tuyau d'échappement peut être assurée par un dispositif assurant une temporisation et permettant l'ouverture après un certain intervalle de temps suivant la mise en marche du moteur.

Il est bien évident que l'invention peut utiliser des pots catalytiques de type différent, que ces pots renferment un catalyseur permettant une oxydation ou une réduction des gaz polluants contenus dans les gaz d'échappement ou encore qu'ils soient réalisés sous la forme d'une structure à trois voies.

L'invention s'applique à tout dispositif d'évacuation et de traitement des gaz d'échappement d'un moteur, que ce moteur soit utilisé sur un véhicule routier, sur tout autre type de véhicule ou sur une installation fixe.

## Revendications

1. Dispositif d'évacuation et de traitement anti-pollution des gaz d'échappement d'un moteur comportant au moins deux conduits (18a, 18b ; 63a, 63b) parallèles reliés chacun à l'une de ses extrémités à une partie des tubulures d'échappement (11, 12, 13, 14) fixées à la sortie des cylindres du moteur et à son autre extrémité à au moins un pot catalytique (3, 65) constitué par une enveloppe renfermant une masse de matériau catalyseur (61, 66) permettant une élimination des gaz nocifs contenus dans les gaz d'échappement du moteur parvenant au contact du catalyseur (61, 66), caractérisé par le fait que :
- les deux conduits parallèles (18a, 18b ; 63a, 63b) sont reliés à une seule enveloppe (3, 65) contenant la masse de matériau catalyseur (61, 66) et débouchent dans l'enveloppe suivant deux zones adjacentes, de manière à diriger deux flux parallèles de gaz d'échappement dans deux parties adjacentes de la masse de matériau catalyseur,
- et que l'un des conduits, ou premier conduit, (18b ; 63b) comporte un volet de fermeture (23 ; 67) relié à des moyens de commande (51, 34) assurant la fermeture ou l'ouverture du premier conduit pendant la phase de démarrage à froid du moteur, suivant la puissance demandée au moteur et maintenant le volet (23 ; 67) en position d'ouverture, lorsque le moteur est chaud, la position de fermeture du premier conduit assurant une mise en communication des deux conduits, pour l'évacuation des gaz du premier conduit.

2. Dispositif suivant la revendication 1, caractérisé par le fait que les deux conduits parallèles (18a, 18b) sont délimités à l'intérieur d'un conduit tubulaire cylindrique (2) par une paroi diamétrale (19) de direction axiale.

3. Dispositif suivant la revendication 2, caractérisé par le fait que la paroi (19) comporte une ouverture (20) dans une zone voisine de l'extrémité de raccordement du conduit tubulaire (2) aux tubulures (9) du moteur, le volet (23) étant monté articulé suivant un bord rectiligne de l'ouverture (20) de manière à être déplacé par pivotement entre une position de fermeture de l'un des conduits paralèles (18b) où il vient en appui contre la paroi du conduit (18b) et une position d'ouverture où il vient en appui contre la paroi (19), au niveau de l'ouverture (20) et de manière à la recouvrir pour assurer sa fermeture.

4. Dispositif suivant la revendication 3, caractérisé par le fait que le volet (23) est solidaire d'un levier (28), disposé à l'extérieur du tube (2), pour permettre son actionnement par l'intermédiaire des moyens de commande (51, 34).

5. Dispositif suivant l'une quelconque des revendications 1 à 4, caractérisé par le fait que les moyens de commande sont constitués par une thermovanne (51) fixée sur le bloc moteur (40) d'un cylindre (41) du moteur comportant un élément thermosensible (52) en contact thermique avec l'eau de refroidissement du moteur circulant dans le chemisage du bloc cylindre (40) du moteur, une chambre communiquant, avec l'atmosphère par une ouverture (59), avec le conduit d'admission (44) du cylindre (41) en aval de la vanne papillon (48) par un conduit (55, 56) et avec la chambre d'un vérin pneumatique (34) par un conduit (58) ainsi qu'un tiroir obturateur (53) solidaire de l'élément thermosensible (52) comportant deux parties élargies (53a, 53b) susceptibles soit de fermer l'ouverture (59) de mise à l'atmosphère de la chambre de la thermovanne (51) et de mettre en communication le conduit d'admission (44) du cylindre avec la chambre du vérin pneumatique (34), soit de mettre la chambre de la thermovanne (51) à l'atmosphère et d'interrompre simultanément la communication entre le conduit d'admission (44) du cylindre et la chambre du vérin pneumatique (34),
le vérin pneumatique (34) comportant une tige (33) solidaire d'une paroi (35) de fermeture de la chambre du vérin pneumatique (34) au moins partiellement déformable, la tige (33) étant reliée, à son extrémité opposée à la paroi (35) du vérin (34) à un organe (28) d'ouverture et de fermeture du volet de fermeture (23) de l'un des conduits d'échappement (18b).

6. Dispositif suivant la revendication 5, caractérisé par le fait que l'organe d'ouverture et de fermeture (28) du volet (23) est constitué par un levier solidaire d'un axe (24) de pivotement du volet (23) relié à une extrémité d'un dispositif élastique de rappel (30) dont l'autre extrémité est reliée à un support (31) fixé sur l'un au moins des conduits d'échappement (18a, 18b).

7. Dispositif suivant l'une quelconque des revendications 5 et 6, caractérisé par le fait que la paroi (35) de la chambre du vérin pneumatique (34) est reliée à un ressort hélicoïdal de rappel (39) dont l'autre extrémité est reliée au corps du vérin (34), de manière à rappeler la tige (33) du vérin (34) et l'organe de manoeuvre (28) du volet (23) dans la position d'ouverture du conduit d'échappement (18b).

8. Dispositif suivant l'une quelconque des revendications 1 à 7, caractérisé par le fait que le volet de fermeture (23) du conduit d'échappement (18b) est monté à l'intérieur d'un boîtier (8) solidaire de l'extrémité des conduits d'échappement reliés aux tubulures (11, 12, 13, 14) du moteur.

9. Dispositif suivant l'une quelconque des revendications 1 à 7, caractérisé par le fait que le volet de fermeture (23) est monté à l'intérieur d'un boîtier (8) solidaire d'un collecteur d'échappement (9) regroupant les tubulures (11, 12, 13, 14) du moteur, à son extrémité de sortie destinée à être raccordée aux conduits d'échappement.

10. Dispositif suivant la revendication 1, caractérisé par le fait que les conduits d'échappement (63a, 63b) disposés en parallèle sont deux conduits tubulaires cylindriques distincts reliés entre eux, au voisinage de leur extrémité de raccordement aux tubulures du moteur, par une conduite en dérivation (64) et à leur autre extrémité à l'enveloppe (65) du pot catalytique,
le
volet (67) de fermeture de l'un des conduits (63b) étant monté articulé au niveau de la conduite en dérivation (64), pour être déplacé par pivotement entre une position de fermeture du conduit (63b) et une position de fermeture de la dérivation (64) et d'ouverture du conduit (63b).

## Patentansprüche

1. Vorrichtung zum Abführen und zur Reinigung von Auspuffgasen eines Motors, mit wenigstens zwei parallelen Leitungen (18a,18b;63a,63b), die jede an einem ihrer Enden an einen Teil der am Auslaß der Zylinder des Motors befestigten Auspuffstutzen (11,12,13,14) und an ihrem anderen Ende an wenigstens einen Katalysator (3,65) angeschlossen sind, der durch eine Hülle gebildet wird, die eine Masse aus Katalysatormaterial (61,66) aufnimmt, die eine Beseitigung von Schadstoffgasen gestattet, die in den Auspuffgasen des Motors enthalten sind, die mit dem Katalysator (61,66) in Berührung kommen, dadurch**gekennzeichnet,** daß:
- die beiden parallelen Leitungen (18a,18b;63a,63b) an eine einzige Hülle (3,65) angeschlossen sind, die die Masse des Katalysatormaterials (61,66) enthält, und derart in zwei benachbarten Zonen in die Hülle münden, daß zwei parallele Auspuffgasströme in zwei benachbarte Bereiche der Masse des Katalysatormaterials geleitet werden,
- und daß eine der Leitungen, oder erste Leitung, (18b; 63b) eine Verschlußklappe (23;67) aufweist, die mit Steuermitteln (51,34) verbunden ist, die das Schließen oder Öffnen der ersten Leitung während der Kaltstartphase des Motors in Abhängigkeit von der geforderten Motorleistung gestatten und die Klappe (23,67) in der Offenstellung halten, wenn der Motor heiß ist, wobei in der Schließstellung der ersten Leitung zwischen den beiden Leitungen eine Verbindung zum Abführen der Gase aus der ersten Leitung besteht.

2. Vorrichtung nach Anspruch 1, dadurch **gekennzeichnet,** daß die beiden parallelen Leitungen (18a,18b) im Inneren einer rohrförmigen zylindrischen Leitung (2) durch eine axial gerichtete diametrale Wand (19) begrenzt werden.

3. Vorrichtung nach Anspruch 2, dadurch **gekennzeichnet,** daß die Wand (19) eine Öffnung (20) in einer dem Anschlußende der rohrförmigen Leitung (2) an die Stutzen (9) des Motors benachbarten Zone aufweist, wobei die Klappe (23) in der Weise gelenkig an einem geradlinigen Rand der Öffnung (20) montiert ist, daß sie durch Schwenken verstellbar ist zwischen einer Schließstellung für eine der parallelen Leitungen (18b), in der sie sich an die Wand der Leitung (18b) anlegt, und einer Offenstellung, in der sie sich an die Wand (19) im Bereich der Öffnung (20) anlegt, so daß sie diese bedeckt, um sie zu schließen.

4. Vorrichtung nach Anspruch 3, dadurch **gekennzeichnet**, daß die Klappe (23) mit einem Hebel (28) verbunden ist, der außerhalb des Rohres (2) angeordnet ist, so daß er durch die Steuermittel (51,34) betätigbar ist.

5. Vorrichtung nach einem der Ansprüche 1 bis 4, dadurch **gekennzeichnet**, daß die Steuermittel gebildet werden durch ein am Motorblock (40) eines Zylinders (41) des Motors befestigtes Thermoventil (51) mit einem thermoempfindlichen Element in thermischem Kontakt mit dem im Mantel des Zylinderblocks (40) des Motors zirkulierenden Kühlwasser, einer Kammer, die durch eine Öffnung (59) mit der Atmosphäre kommuniziert, durch eine Leitung (55,56) mit der Ansaugleitung (44) des Zylinders (41) stromabwärts der Drosselklappe (48) kommuniziert und mit der Kammer eines Pneumatikzylinders (34) über eine Leitung (58) kommuniziert, sowie mit einem Schiebekolben (53), der mit dem thermoempfindlichen Element (52) verbunden ist und zwei vergrößerte Abschnitte (53a,53b) aufweist, die in der Lage sind, entweder die Öffnung (59) zur Verbindung der Kammer des Thermoventils (51) mit der Atmosphäre zu schließen und die Ansaugleitung (44) des Zylinders mit der Kammer des Pneumatikzylinders (34) zu verbinden oder die Kammer des Thermoventils (51) der Atmosphäre auszusetzen und gleichzeitig die Verbindung zwischen der Ansaugleitung (44) des Zylinders und der Kammer des Pneumatikzylinders (34) zu unterbrechen, wobei das Pneumatikventil (34) eine Kolbenstange (33) aufweist, die an einer zumindest teilweise verformbaren Wand (35) zum Verschließen der Kammer des Pneumatikzylinders (34) angebracht und an ihrem der Wand (35) des Zylinders (34) entgegengesetzten Ende mit einem Organ (28) zum Öffnen und Schließen der Schließklappe (23) für eine der Auspuffleitungen (18b) verbunden ist.

6. Vorrichtung nach Anspruch 5, dadurch **gekennzeichnet**, daß das Organ (28) zum Öffnen und Schließen der Klappe (23) durch einen Hebel gebildet wird, der an einer Schwenkachse (24) für die Klappe (23) angebracht und mit einem Ende einer elastischen Rückstelleinrichtung (30) verbunden ist, deren anderes Ende mit einem Halter (31) verbunden ist, der an wenigstens einer der Auspuffleitungen (18a,18b) befestigt ist.

7. Vorrichtung nach Anspruch 5 oder 6, dadurch **gekennzeichnet**, daß die Wand (35) der Kammer des Pneumatikzylinders (34) mit einer schraubenförmigen Rückstellfeder (39) verbunden ist, deren anderes Ende so mit dem Gehäuse des Zylinders (34) verbunden ist, daß die Kolbenstange (33) des Zylinders (34) und das Betätigungsorgan (28) für die Klappe (23) in die Offenstellung der Auspuffleitung (18b) zurückgestellt werden.

8. Vorrichtung nach einem der Ansprüche 1 bis 7, dadurch **gekennzeichnet,** daß die Schließklappe (23) für die Auspuffleitung (18b) im Inneren eines Gehäuses (8) montiert ist, das am Ende der Auspuffleitung sitzt und mit den Stutzen (11,12,13,14) des Motors verbunden ist.

9. Vorrichtung nach einem der Ansprüche 1 bis 7, dadurch **gekennzeichnet,** daß die Schließklappe (23) im Inneren eines Gehäuses (8) montiert ist, das an einem Auspuffkrümmer (9) ausgebildet ist, der die Stutzen (11,12,13,14) des Motors mit seinem für den Anschluß an die Auspuffleitungen bestimmten Auslaßende verbindet.

10. Vorrichtung nach Anspruch 1, dadurch **gekennzeichnet**, daß die parallel angeordneten Auspuffleitungen (63a,63b) zwei getrennte rohrförmige, zylindrische Leitungen sind, die in der Nähe ihres Anschlußendes an die Stutzen des Motors durch eine Zweigleitung (64) miteinander verbunden sind und an ihrem anderen Ende mit der Hülle (65) des Katalysators verbunden sind,
wobei die Schließklappe (67) für eine der Leitungen (63b) gelenkig in Höhe der Zweigleitung (64) montiert ist, so daß sie schwenkbar ist zwischen einer Stellung zum Verschließen der Leitung (63b) und einer Stellung zum Verschließen der Zweigleitung (64) und zum Öffnen der Leitung (63b).

## Claims

1. Device for the discharge and anti-pollution treatment of the exhaust gases from an engine, including at least two parallel pipes (18a, 18b; 63a, 63b) each connected at one end to part of the exhaust ducts (11, 12, 13, 14) fixed to the outlet from the engine cylinders and at the other end to at least one catalyst chamber (3, 65) consisting of a casing enclosing a mass of catalytic material (61, 66) enabling the noxious gases contained in the exhaust gases from the engine coming into contact with the catalyst (61, 66) to be eliminated, characterised by the fact that:
- the two parallel pipes (18a, 18b; 63a, 63b) are connected to a single casing (3, 65) containing the mass of catalytic material (61, 66) and opening out into the casing in two adjacent zones, so as to direct two parallel exhaust gas flows into two adjacent parts of the mass of catalytic material,
- and that one of the pipes, or first pipe (18b; 63b) has a closing flap (23; 67) connected to control means (51, 34) providing the closing or opening of the first pipe during the cold-start phase of the engine, depending on the power required of the engine, and holding the flap (23; 67) in the open position when the engine is hot, the position in which the first pipe is closed putting the two pipes in communication with each other, so that the gases from the first pipe can be discharged.

2. Device according to Claim 1, characterised by the fact that the two parallel pipes (18a, 18b) are defined within a cylindrical tubular pipe (2) by a diametral wall (19) with an axial direction.

3. Device according to Claim 2, characterised by the fact that the wall (19) has an opening (20) in a zone adjacent to the end of the tubular pipe (2) connected to the engine ducts (9), the flap (23) being mounted so as to be articulated along a rectilinear edge of the opening (20) so as to be moved by pivoting between a position in which one of the parallel pipes (18b) is closed, in which it comes to bear against the wall of the pipe (18b), and an opening position in which it comes to bear against the wall (19), at the opening (20) and so as to cover it in order to close it off.

4. Device according to Claim 3, characterised by the fact that the flap (23) is secured to a lever (28), disposed outside the pipe (2), so as to enable it to be actuated by the control means (51, 34).

5. Device according to any one of Claims 1 to 4, characterised by the fact that the control means consist of a thermostatic valve (51) fixed to the engine block (40) of a cylinder (41) of the engine, including a heat-sensitive element (52) in thermal contact with the engine cooling water circulating in the jacket of the cylinder block (40) of the engine, a chamber communicating with the atmosphere through an opening (59), with the inlet manifold (44) to the cylinder (41) downstream of the butterfly valve (48) through a pipe (55, 56) and with the chamber of a pneumatic actuator (34) through a pipe (58) and an obturating slide (53) fixed to the heat-sensitive element (52) having two enlarged parts (53a, 53b) able either to close off the opening (59) through which the chamber of the thermostatic valve (51) is opened to atmosphere and to put the cylinder inlet manifold (44) in communication with the chamber of the pneumatic actuator (34), or to open the chamber of the thermostatic valve (51) to atmosphere and at the same time to interrupt the communication between the cylinder inlet manifold (44) and the chamber of the pneumatic actuator (34), the pneumatic actuator (34) having a stem (33) fixed to a wall (35) closing off the chamber of the pneumatic actuator (34) which is at least partially deformable, the stem (33) being connected, at its end opposite to the wall (35) of the actuator (34), to a device (28) for opening and closing the flap (23) for closing off one of the exhaust pipes (18b).

6. Device according to Claim 5, characterised by the fact that the device (28) for opening and closing the flap (23) consists of a lever fixed to a pin (24) on which the flap (23) pivots and which is connected to one end of an elastic return device (30), the other end of which is connected to a support (31) fixed to at least one of the exhaust pipes (18a, 18b).

7. Device according to either one of Claims 5 and 6, characterised by the fact that the wall (35) of the chamber of the pneumatic actuator (34) is connected to a helical return spring (39), the other end of which is connected to the body of the actuator (34), so as to return the stem (33) of the actuator (34) and the device (28) for operating the flap (23) to the position in which the exhaust pipe (18b) is open.

8. Device according to any one of Claims 1 to 7, characterised by the fact that the flap (23) for closing off the exhaust pipe (18b) is mounted inside a housing (8) fixed to the end of the exhaust pipes connected to the engine ducts (11, 12, 13, 14).

9. Device according to any one of Claims 1 to 7, characterised by the fact that the closing flap (23) is mounted inside a housing (8) fixed to an exhaust manifold (9) including the ducts (11, 12, 13, 14) from the engine, at its outlet end intended to be connected to the exhaust pipes.

10. Device according to Claim 1, characterised by the fact that the exhaust pipes (63a, 63b) disposed in parallel are two separate cylindrical tubular pipes connected to one another, in the vicinity of the end at which they are connected to the ducts from the engine, by means of a diversion pipe (64), and at their other end to the casing (65) of the catalyst chamber, the flap (67) for closing off one of the pipes (63b) being mounted so as to be articulated at the diversion pipe (64), so as to be moved by pivoting between a position in which the pipe (63b) is closed and a position in which the diversion (64) is closed and the pipe (63b) is open.
